# EUROPÄISCHE PATENTSCHRIFT

(11) **EP 2 118 524 B1**
(45) Veröffentlichungstag und Bekanntmachung des Hinweises auf die Patenterteilung: **17.11.2010**
(21) Anmeldenummer: 08701279.5
(22) Anmeldetag: 08.01.2008
(51) Int. Cl.: F16H 57/00, F16H 57/02

(54) **GETRIEBE**
TRANSMISSION
BOÎTE DE VITESSES

(30) Priorität: 08.02.2007 DE 102007006228
(43) Veröffentlichungstag der Anmeldung: 18.11.2009
(73) Patentinhaber: ZF Friedrichshafen AG, 88038 Friedrichshafen (DE)
(72) Erfinder: MÜLLER, Walter, 88046 Friedrichshafen (DE)
(86) Internationale Anmeldenummer: PCT/EP2008/050103
(87) Internationale Veröffentlichungsnummer: WO 2008/095740

(56) Entgegenhaltungen:
- DE-A1- 10 250 733
- DE-A1- 19 502 560
- US-A- 5 404 772

## Beschreibung

Die vorliegende Erfindung betrifft ein Getriebe gemäß der im Oberbegriff des Patentanspruches 1 näher definierten Art.

Beispielsweise ist aus der Druckschrift DE 195 02 560 A1 ein Getriebe mit einem Gehäuse bekannt, in dem zwei relativ verdrehbare Zahnräder angeordnet sind. Die beiden Zahnräder stehen im Eingriff miteinander, wobei die jeweiligen Wellen der Zahnräder mit einem Ende in einer antriebsseitigen Lagerbrille und mit ihrem anderen Ende in einer abtriebsseitigen Lagerbrille gelagert sind. Die beiden Lagerbrillen sind durch einen elastischen Federring von dem Getriebegehäuse getrennt.

Eine ähnliche Ausgestaltung ist aus der Druckschrift GB 814,724 bekannt. Auch bei dieser Ausgestaltung sind die mit Zahnrädern versehenen Wellen jeweils in Lagerbrillen gelagert, wobei durch ringförmlge Gummlelemente eine Entkoppelung zwischen den Wellenenden und dem Gehäuse vorgesehen ist.

Aus der DE 102 50 733 A1 ist ein Getriebe mit einer Schalteinrichtung bekannt, die an einer Lagerbrille des Getriebes gelagert werden kann.

Es hat sich gezeigt, dass die bei dem bekannten Getriebe vorgesehene Entkopplung nicht ausreichend ist, um die Schall- bzw. Geräusch- und Schwingungsübertragung ausreichend zu reduzieren.

Deshalb liegt der vorliegenden Erfindung die Aufgabe zugrunde, ein Getriebe der eingangs beschriebenen Gattung vorzuschlagen, bei dem eine vollständige Unterbindung einer Schall- und Schwingungsübertragung auf das Getriebegehäuse realisiert und die konstruktive Anordnung der Lagerbrillen verbessert wird.

Diese Aufgabe wird erfindungsgemäß durch die Merkmale des Patentanspruches 1 gelöst. Weitere vorteilhafte Ausgestaltungen ergeben sich insbesondere aus den Unteransprüchen.

Demnach wird ein Getriebe mit einem Gehäuse vorgeschlagen, in dem zumindest zwei Wellen zum Einstellen einer gewünschten Übersetzung über einen Gangradsatz miteinander koppelbar sind, wobei die Wellen mittels Lagerbrillen in dem Gehäuse gelagert sind und wobei die Lagerbrillen über zumindest ein Dämpfungselement zur Schall- und Schwingungsdämpfung an dem Gehäuse gelagert sind. Erfindungsgemäß wird eine die Übersetzung einstellende Schalteinrichtung an zumindest einer der Lagerbrillen befestigt.

Auf diese Weise werden auch die über die Schalteinrichtung beispielsweise durch die Gangradsätze erzeugten Geräusche und Schwingungen nicht an das Gehäuse des Getriebes übertragen, da die Schalteinrichtung unabhängig von ihrer jeweiligen Ausgestaltung an den bereits entkoppelten Lagerbrillen befestigt bzw. gehalten wird.

Um in vorteilhafter Weise auch axiale Kräfte durch die beiden Lagerbrillen aufnehmen zu können, werden erfindungsgemäß die beiden Lagerbrillen in axialer Richtung der Wellen über zumindest ein Verbindungselement oder dergleichen verbunden. Dadurch kann insbesondere bei aus Aluminiumverbindungen hergestellten Gehäusen die Längsausdehnung zwischen den aus Stahl hergestellten Wellen und dem Aluminiumgehäuse unterbunden werden. Infolgedessen können auch unterschiedliche Vorspannungen an den Lagern der Wellen vermieden werden. Zudem werden durch die elastische Kopplung zwischen der Lagerung der Wellen und dem Gehäuse Lastwechsel in sämtliche Achsrichtungen, die zur axialen Verschiebung führen können, verhindert. Als Verbindungselemente können vorzugsweise Rundstangen, Platten oder dergleichen Elemente verwendet werden.

Im Rahmen einer besonders vorteilhaften Ausführung der vorliegenden Erfindung wird bei einer Schalteinrichtung, die eine Betätigungsstange zum Betätigen von Schaltgabeln umfasst, jedes Ende der Betätigungsstange bewegbar an der jeweils zugeordneten Lagerbrille gelagert. Infolgedessen kann die jeweils gewünschte Übersetzung durch die Betätigung der Schaltgabeln ermöglicht werden, ohne dass die dabei entstehenden Geräusche und Schwingungen auf das Gehäuse übertragen werden können. Zudem können auch Einflüsse durch Wärmeausdehnungen aufgrund der gleichen Wärmeausdehnungskoeffizienten bezüglich auf die Position der Hauptwelle bei der Schalteinrichtung verhindert werden.

Bei einer anderen Ausführung der Schalteinrichtung, bei der die Schalteinrichtung mehrere Schaltschienen zum Betätigen von Schaltschwingen umfasst, kann jedes Ende der Schaltschienen verschiebbar an der zugeordneten Lagerbrille gelagert werden. Auch hier erfolgt somit eine Entkopplung von dem Gehäuse über die Lagerbrillen.

Es hat sich gezeigt, dass bei einer Schalteinrichtung mit Schaltschienen und Schaltschwingen es von Vorteil ist, wenn die Lagerbrillen über eine Platte verbunden werden. Auf diese Weise können die Schwingen der Schalteinrichtung an der Platte schwenkbar gelagert werden, um auch vom Gehäuse entkoppelt zu sein. Vorzugsweise können die Schwingen über einen als Schwenkachse vorgesehenen Bolzen gelagert werden, der mit der Platte verbunden ist. Der Bolzen wiederum kann mit der Platte verschraubt werden. Der verwendete Bolzen kann vorzugsweise als Sechskantschraube oder dergleichen ausgebildet sein, die in ein entsprechendes Gewindeloch der als Verbindungselement ausgebildeten Platte eingeschraubt wird. Es sind aber auch andere Befestigungsarten, wie z. B. Schweißen, Nieten oder dergleichen einsetzbar, so dass die angegebene Verbindung lediglich beispielhaft ist.
(Weiter auf Seite 4 der ursprünglich eingereichten Unterlagen.)

Um eine Einstellung beispielsweise der Wellenlager bei einer Kegelrollenlagerung zu ermöglichen, ist es besonders vorteilhaft, wenn die gewählten Verbindungselemente längeneinstellbar sind. Bei der Verwendung von Rundstangen als Verbindungselemente können diese mit ihren Enden jeweils in mit dem Dämpfungselement ausgekleideten Aussparungen oder dergleichen des Gehäuses befestigt sein. Es sind auch andere Befestigungsarten denkbar.

Ein mögliches Beispiel der vorliegenden Erfindung kann als Vorgelegegetriebe ausgeführt sein. Das Vorgelegegetriebe weist eine Getriebeeingangswelle, eine Vorgelegewelle und eine Hauptwelle sowie eine Getriebeausgangswelle auf, die über einen Gangradsatz miteinander gekoppelt sind. Die Getriebeeingangswelle, die Vorgelegewelle und die Hauptwelle sowie die dazugehörige Schalteinrichtung sind über die entkoppelten Lagerbrillen in dem Gehäuse gelagert. Die Schalteinrichtung, die üblicherweise der Getriebeeingangswelle und der Hauptwelle benachbart ist, wird dazu jeweils an einem Ende der beiden Lagerbrillen befestigt, um die vorbeschriebene vollständige Entkoppelung zwischen dem Gangradsatz des Vorgelegegetriebes und dem Gehäuse zu realisieren. Es sind auch andere Anwendungsmöglichkeiten bei z. B anders ausgestalteten Getrieben denkbar.

Wenn beispielsweise das Getriebe eine zusätzliche Bereichsgruppe an der Getriebeausgangswelle aufweist, wie dies bei so genannten Range-Getrieben üblich ist, kann gemäß einer nächsten vorteilhaften Ausgestaltung der Erfindung vorgesehen sein, dass die Getriebeausgangswelle mit der gekoppelten Bereichsgruppe über zumindest ein weiteres Dämpfungsglied oder dergleichen zur Schall- und Schwingungsdämpfung von dem Gehäuse entkoppelt ist.

Auf diese Weise wird nicht nur die Geräuschübertragung von dem Gangradsatz des Vorgelegegetriebes entkoppelt, sondern es wird zusätzlich auch die Geräuschübertragung von der Bereichsgruppe, also von dem Planetengetriebe, zum Gehäuse unterbunden. Somit wird ein ganzheitliches Konzept zur Geräuschminimierung für ein Getriebe realisiert.

Im Rahmen einer weiteren Ausführung der Erfindung kann zur Entkopplung der Bereichsgruppe eine Stützstelle der so genannten GP-Reaktion der Bereichsgruppe und ein Lagerträger der Getriebeausgangswelle mit einem Dämpfungselement an dem Gehäuse befestigt werden. Als Stützstelle ist ein Kupplungskörper der GP-Reaktion vorgesehen, welcher mit dem Lagerträger zusammen über einen Haltebolzen auf einfachste Weise in einer Ausnehmung des Gehäuses befestigt werden kann. Beispielsweise kann die Ausnehmung mit dem Dämpfungselement ausgekleidet sein. Es sind auch andere Arten der Befestigung des Kupplungskörpers und des Lagerträgers an dem Gehäuse denkbar, um eine Entkopplung zu erzielen. Wesentlich dabei ist nur, dass das Dämpfungselement entlang des Übertragungsweges auf irgendeine Weise zwischen geschaltet ist, so dass eine vollständige Entkopplung der Getriebeausgangswelle mit der Bereichsgruppe und dem Gehäuse realisiert wird.

Nachfolgend wird die vorliegende Erfindung anhand der Zeichnungen näher erläutert.

Es zeigen:
- Fig. 1: eine schematische, geschnittene Teilansicht eines Gehäu- ses eines erfindungsgemäßen Getriebes mit einer Schalt- gabeln umfassenden Schalteinrichtung, die schall- und schwingungsgedämpft im Gehäuse angeordnet ist;
- Fig. 2: eine schematische, geschnittene Teilansicht eines erfin- dungsgemäßen Getriebes mit einer Schaltschienen umfas- senden Schalteinrichtung, die schall- und schwingungsge- dämpft im Gehäuse angeordnet ist und
- Fig. 3: eine schematische teilgeschnittene Ansicht einer abtriebs- seitigen Lagerung des erfindungsgemäßen Getriebes mit einer schall- und schwingungsgedämpft angeordneten Be- reichsgruppe.

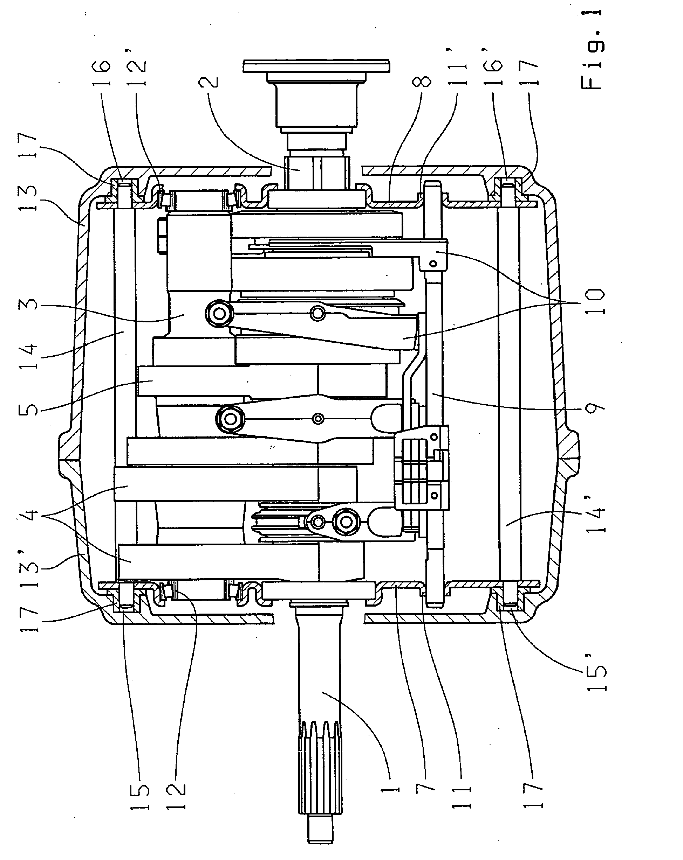

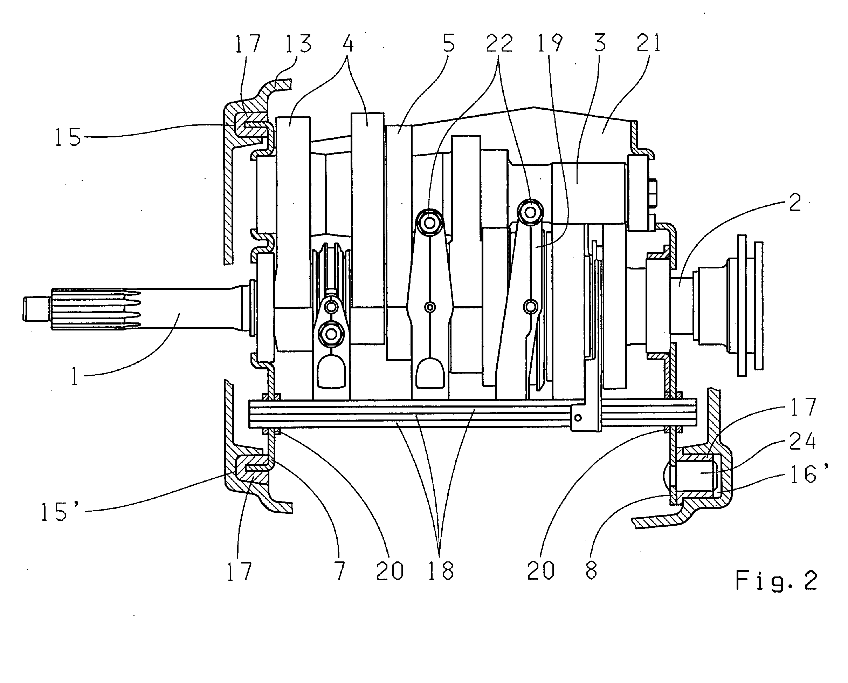

In Fig. 1 und 2 ist beispielhaft jeweils als Getriebe ein Vorgelegewellengetriebe schematisch gezeigt. Das Vorgelegewellengetriebe weist eine Getriebeeingangswelle 1 auf, die mit einer Hauptwelle 2 gekoppelt ist. Parallel zu der Getriebeeingangswelle 1 und der Hauptwelle 2 ist eine Vorgelegewelle 3 angeordnet. Die Vorgelegewelle 3 ist über zwei Konstanträder 4 mit der Getriebeeingangswelle 1 gekoppelt. Des Weiteren umfasst die Vorgelegewelle 3 einen Gangradsatz 5 mit mehreren Gangrädern, um gewünschte Übersetzungen zwischen der Getriebeeingangswelle 1 und der Hauptwelle 2 bzw. der Getriebeausgangswelle 6 zu realisieren.

Die Getriebeeingangswelle 1, die Hauptwelle 2 und die Vorgelegewelle 3 sind jeweils in einer antriebsseitigen Lagerbrille 7 und einer abtriebsseitigen Lagerbrille 8 gelagert. Dazu sind die beiden Lagerbrillen 7, 8 jeweils im Bereich der jeweiligen Lagerstellen als Lagerträger für die Lagerungen der Wellen ausgebildet.

In Fig. 1 ist die Lagerung der Vorgelegewelle 3 z. B. mittels eines Kegelrollenlagers 12, 12' realisiert. Im Gegensatz zu dem in Fig. 2 dargestellten Getriebe ist bei dem in Fig. 1 dargestellten Getriebe als Schalteinrichtung eine Betätigungsstange 9 mit daran befestigten Schaltgabeln 10 vorgesehen. Die Betätigungsstange 9 ist in entsprechenden Aufnahmen 11, 11' der beiden Lagerbrillen 7, 8 bewegbar gelagert. Dadurch, dass die Lagerungen der Getriebeeingangswelle 1, der Hauptwelle 2 und der Vorgelegewelle 3 in getrennten Lagerbrillen 7, 8 vorgesehen sind, wird der Achsabstand der jeweiligen Lager beibehalten. Die Lagerbrillen 7, 8 sind elastisch in entsprechenden Aussparungen 15, 15'; 16, 16' der Gehäuseteile 13, 13' antriebsseitig und abtriebsseitig des Vorgelegewellengetriebes aufgenommen. Dazu sind die Aussparungen 15, 15'; 16, 16' mit einem Dämpfungselement 17 aus elastischem Material z. B. ausgekleidet.

Um Axialkräfte der Getriebeeingangswelle 1, der Hauptwelle 2 und der Vorgelegewelle 3 aufnehmen zu können, sind die beiden Lagerbrillen 7, 8 durch Verbindungselemente miteinander verbunden. In Fig. 1 werden als Verbindungselemente Rundstangen 14, 14' verwendet. Diese sind jeweils an einem oberen Ende und einem unteren Ende der beiden Lagerbrillen 7, 8 befestigt und in den vorbeschriebenen Aussparungen 15, 15'; 16, 16' in der Wand der Gehäuseteile 13, 13' aufgenommen. Über die jeweils mit dem Dämpfungselement 17 ausgekleideten Aussparungen 15, 15'; 16, 16' sind sowohl die Lagerbrillen 7, 8 als auch die Enden der Rundstangen 14, 14' von den Gehäuseteilen 13, 13' entkoppelt. Da die Schalteinrichtung mit ihrer Betätigungsstange 9 ebenfalls an den Lagerbrillen 7, 8 gehalten ist, wird auch die Schalteinrichtung von den Gehäuseteilen 13, 13' entkoppelt. Als Dämpfungselement 17 wird ein elastisches Material mit Dämpfungseigenschaften verwendet.

Zudem ist nicht nur die Längenausdehnung zwischen dem z. B. aus Aluminium gefertigten Gehäuseteilen 13, 13' und den aus Stahl gefertigten Wellen 1, 2, 3 unterbunden, sondern es werden auch durch die elastische Lagerung in allen drei Achsrichtungen Lastwechsel gedämpft, die zu axialen Verschiebungen führen können. Die Rundstangen 14, 14' können längeneinstellbar sein, um die Lagereinstellung bei den Lagern der Getriebeeingangswelle 1, der Hauptwelle 2 und der Vorgelegewelle 3 einstellen zu können.

Somit wird eine vollständige Entkoppelung der Schall- und Schwingungsübertragung des Gangradsatzes 5 von dem Vorgelegewellengetriebe in die Gehäuseteile 13, 13' über die Lagerungen und die Schalteinrichtung unterbunden.

Im Unterschied zu Fig. 1 ist in Fig. 2 eine andere Schalteinrichtung dargestellt. Die in Fig. 2 gezeigte Schalteinrichtung umfasst Schaltschienen 18, welche jeweils Schaltschwingen 19 in an sich bekannter Weise betätigen, um gewünschte Übersetzungen in dem Getriebe zu realisieren. Die Schaltschienen 18 sind mit ihren Enden an den Lagerbrillen 7, 8 verschiebbar gelagert. Dazu sind Gleitführungen 20, 20' vorgesehen. Die Schaltschwingen 19 sind an dem Verbindungselement zum Verbinden der beiden Lagerbrillen 7, 8 gehalten. Als Verbindungselement wird bei der in Fig. 2 gezeigten Ausführung eine Platte 21 verwendet. Die Schaltschwingen 19 sind über Sechskantschrauben 22, die in der Platte 21 verschraubt sind, drehbar gelagert, so dass die Sechskantschrauben 22 den Drehpunkt für die Schwingen 19 bilden.

Die beiden Lagerbrillen 7, 8 sind an ihren Enden abgewinkelt, so dass die abgewinkelten Enden jeweils in den Aussparungen 15, 15'; 16, 16' in der Wand des Gehäuses 13 gehalten sind. Dazu weisen die Aussparungen 15, 15'; 16, 16' ebenfalls das Dämpfungselement 17 auf. Um eine Zentrierung der Lageranordnung in dem Gehäuse 13 zu realisieren, ist die Lagerbrille 8 mit einem aufgenieteten Bolzen 24 in der Aussparung 16' des Gehäuses 13 befestigt.

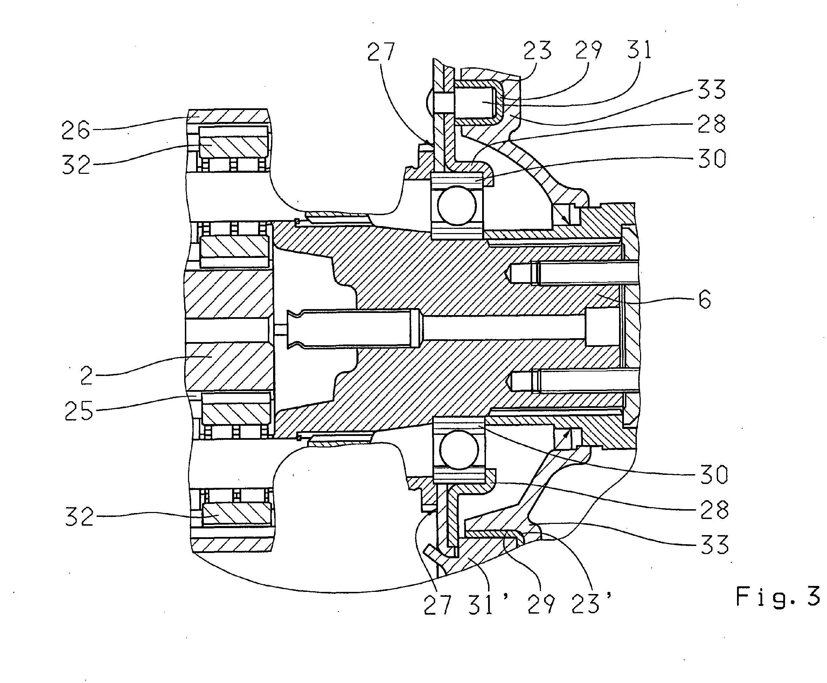

In Fig. 3 ist eine Teilansicht einer abtriebsseitigen Lagerung eines so genannten Range-Getriebes dargestellt. Bei dieser Anordnung ist die Hauptwelle 2 mit einer Bereichsgruppe als Planetensatz gekoppelt. Dazu ist das Sonnenrad 25 mit der Hauptwelle 2 verbunden. Die Stegwelle bzw. der Planetenträger wird durch die Getriebeausgangswelle 6 gebildet.

Um eine Übersetzung von der Getriebeeingangswelle 1 zur Getriebeausgangswelle 6 zu realisieren, ist das Hohlrad 26 mit dem Gehäuse 33 verbunden. Das Hohlrad 26 steht mit Planetenrädern 32 im Eingriff. Um diese so genannte GP-Reaktion an dem Gehäuse 33 abzustützen, ist als Stützstelle ein Kupplungskörper 27 vorgesehen. Der Kupplungskörper 27 ist bei dem erfindungsgemäßen Getriebe mit einem Lagerträger 28 der Getriebeausgangswelle 6 über ein weiteres Dämpfungselement 29 mit dem Gehäuse 33 verbunden.

Dazu ist der Lagerträger 28 des Wälzlagers 30 der Getriebeausgangswelle 6 mit dem Kupplungskörper 27 der GP-Reaktion über Haltebolzen 31, 31' in zugeordneten Halteaufnahme 23, 23' des Gehäuses 33 befestigt. Jede Halteaufnahme 23, 23' ist mit dem weiteren Dämpfungselement 29 ausgekleidet, so dass eine vollständige Entkopplung der abtriebsseitigen Lagerung der Getriebeausgangswelle 6 und auch der mit der Hauptwelle 2 gekoppelten Bereichsgruppe ermöglicht wird. Auch das Dämpfungselement 29 ist aus einem elastischen Material oder dergleichen gefertigt.

### Bezugszeichen

- 1: Getriebeeingangswelle
- 2: Hauptwelle
- 3: Vorgelegewelle
- 4: Konstanträder
- 5: Gangradsatz
- 6: Getriebeausgangswelle
- 7: antriebsseitige Lagerbrille
- 8: abtriebsseitige Lagerbrille
- 9: Betätigungsstange
- 10: Schaltgabel
- 11, 11': Aufnahme
- 12, 12': Kegelrollenlager
- 13, 13': Gehäuse, Gehäuseteil
- 14, 14': Rundstange
- 15, 15': Aussparung
- 16, 16': Aussparung
- 17: Dämpfungselement
- 18: Schaltschiene
- 19: Schaltschwinge
- 20, 20': Gleitführung
- 21: Platte
- 22: Sechskantschrauben
- 23, 23': Halteaufnahme
- 24: Bolzen
- 25: Sonne
- 26: Hohlrad
- 27: Kupplungskörper
- 28: Lagerträger
- 29: weiteres Dämpfungselement
- 30: Wälzlager
- 31, 31': Haltebolzen
- 32: Planetenräder
- 33: Gehäuse

## Patentansprüche

1. Getriebe mit einem Gehäuse (13, 13', 33), in dem zumindest zwei Wellen (1, 2) zum Einstellen einer gewünschten Übersetzung über einen Gangradsatz (5) miteinander koppelbar sind, wobei die Wellen (1, 2) mittels Lagerbrillen (7, 8) in dem Gehäuse (13, 13', 33) gelagert sind, und wobei die Lager brillen (7, 8) über zumindest ein Dämpfungselement (17) zur Schall- und Schwingungsdämpfung an dem Gehäuse (13, 13', 33) gelagert sind, **dadurch gekennzeichnet, dass** eine die Übersetzung einstellende Schalteinrichtung zumindest an einer der von dem Gehäuse (13, 13', 33) entkoppelten Lagerbrillen (7, 8) befestigt ist und die beiden Lagerbrillen (7, 8) in axialer Richtung der Wellen (1, 2) über zumindest ein Verbindungselement verbunden sind.

2. Getriebe nach Anspruch 1, **dadurch gekennzeichnet, dass** als Verbindungselement eine Rundstange (14, 14') und/oder eine Platte (21) vorgesehen ist.

3. Getriebe nach Anspruch 2, **dadurch gekennzeichnet, dass** die Schaltschwingen (19) der Schalteinrichtung an der Platte (21) schwenkbar gelagert sind.

4. Getriebe nach Anspruch 3, **dadurch gekennzeichnet, dass** die Schaltschwingen (19) über einen als Schwenkachse vorgesehenen Bolzen gelagert sind, der mit der Platte (21) verbunden ist.

5. Getriebe nach Anspruch 4, **dadurch gekennzeichnet, dass** der Bolzen als Sechskantschraube (22) mit der Platte (21) verschraubt ist.

6. Getriebe nach einem der Ansprüche 1 bis 5, **dadurch gekennzeichnet, dass** die Verbindungselemente längenverstellbar sind.

7. Getriebe nach einem der Ansprüche 2 bis 6, **dadurch gekennzeichnet, dass** jede Rundstange (14, 14') mit ihren Enden jeweils in mit dem Dämpfungselement (17) ausgekleideten Aussparungen (15, 15'; 16, 16') des Gehäuses (13, 13', 33) befestigt ist.

8. Getriebe nach Anspruch 1, **dadurch gekennzeichnet, dass** die Schalteinrichtung eine Betätigungsstange (9) zum Betätigen von Schaltgabeln (10) umfasst, wobei jedes Ende der Betätigungsstange (9) bewegbar an der zugeordneten Lagerbrille (7, 8) gelagert ist.

9. Getriebe nach Anspruch 1, **dadurch gekennzeichnet, dass** die Schalteinrichtung mehrere Schaltschienen (18) zum Betätigen von Schaltschwingen (19) umfasst, wobei jedes Ende der Schaltschienen (18) verschiebbar an der zugeordneten Lagerbrille (7, 8) gelagert ist.

10. Getriebe nach einem der vorangehenden Ansprüche, **dadurch gekennzeichnet, dass** bei einem Vorgelegegetriebe zumindest eine Getriebeeingangswelle (1), zumindest eine Vorgelegewelle (3), eine Hauptwelle (2) und eine zugeordnete Schalteinrichtung über die entkoppelten Lagerbrlllen (7, 8) gelagert sind.

11. Getriebe nach einem der vorangehenden Ansprüche, **dadurch gekennzeichnet, dass** eine Getriebeausgangswelle (6) mit einer gekoppelten Bereichsgruppe über zumindest ein weiteres Dämpfungselement (29) zur Schall- und Schwingungsdämpfung von dem Gehäuse (33) entkoppelt ist.

12. Getriebe nach Anspruch 11. **dadurch gekennzeichnet, dass** eine Stützstelle der Reaktion der Bereichsgruppe und ein Lagerträger (28) der Getriebeausgangswelle (6) mit dem Dämpfungselement (29) an dem Gehäuse (33) befestigt ist.

13. Getriebe nach Anspruch 11 oder 12, **dadurch gekennzeichnet, dass** ein Kupplungskörper (27) als Stützstelle und der Lagerträger (28) über Haltebolzen (31) in einer zugeordneten Halfeaufnahme (23, 23') des Gehäuses (33) befestigt ist.

14. Getriebe nach Anspruch 13, **dadurch gekennzeichnet, dass** jede Helteaufnahme (23, 23') mit dem Dämpfungselement (29) ausgekleidet ist.

15. Getriebe nach Anspruch 13 oder 14, **dadurch gekennzeichnet, dass** jeder Haltebolzen (31, 31') in der zugeordneten Halteaufnahme (23, 23') vernietet ist.

## Claims

1. Transmission having a housing (13, 13', 33) in which at least two shafts (1, 2) can be coupled to one another via a gearwheel set (5) so as to set a desired transmission ratio, with the shafts (1, 2) being mounted in the housing (13, 13', 33) by means of bearing panels (7, 8), and with the bearing panels (7, 8) being mounted on the housing (13, 13', 33) via at least one damping element (17) for noise and vibration damping, **characterized in that** a shift device which sets the transmission ratio is fastened to one of the bearing panels (7, 8) which is decoupled from the housing (13, 13', 33), and the two bearing panels (7, 8) are connected in the axial direction of the shafts (1, 2) via at least one connecting element.

2. Transmission according to Claim 1, **characterized in that** a round rod (14, 14') and/or a plate (21) is provided as a connecting element.

3. Transmission according to Claim 2, **characterized in that** the shift rockers (19) of the shift device are pivotably mounted on the plate (21).

4. Transmission according to Claim 3, **characterized in that** the shift rockers (19) are mounted by means of a bolt which is provided as a pivot axle and which is connected to the plate (21).

5. Transmission according to Claim 4, **characterized in that** the bolt, in the form of a hexagonal screw (22), is screwed to the plate (21).

6. Transmission according to one of Claims 1 to 5, **characterized in that** the connecting elements are adjustable in length.

7. Transmission according to one of Claims 2 to 6, **characterized in that** each round rod (14, 14') is fastened with its ends in each case in cutouts (15, 15'; 16, 16'), which are lined with the damping element (17), of the housing (13, 13', 33).

8. Transmission according to Claim 1, **characterized in that** the shift device comprises an actuating rod (9) for actuating shift forks (10), with each end of the actuating rod (9) being movably mounted on the associated bearing panel (7, 8).

9. Transmission according to Claim 1, **characterized in that** the shift device comprises a plurality of shift rails (18) for actuating shift rockers (19), with each end of the shift rails (18) being movably mounted on the associated bearing panel (7, 8).

10. Transmission according to one of the preceding claims, **characterized in that**, in the case of a countershaft transmission, at least one transmission input shaft (1), at least one countershaft (3), a main shaft (2) and an associated shift device are mounted by means of the decoupled bearing panels (7, 8).

11. Transmission according to one of the preceding claims, **characterized in that** a transmission output shaft (6) with a coupled range group is decoupled from the housing (33) via at least one further damping element (29) for noise and vibration damping.

12. Transmission according to Claim 11, **characterized in that** a support point of the reaction of the range group and a bearing carrier (28) of the transmission output shaft (6) are fastened to the housing (33) via the damping element (29).

13. Transmission according to Claim 11 or 12, **characterized in that** a clutch body (27) as a support point and the bearing carrier (28) are fastened via holding bolts (31) in an associated holding receptacle (23, 23') of the housing (33).

14. Transmission according to Claim 13, **characterized in that** each holding receptacle (23, 23') is lined with the damping element (29).

15. Transmission according to Claim 13 or 14, **characterized in that** each holding bolt (31, 31') is riveted in the associated holding receptacle (23, 23').

## Revendications

1. Boîte de vitesses comprenant un boîtier (13, 13', 33), dans lequel au moins deux arbres (1, 2) peuvent être accouplés l'un à l'autre pour ajuster une multiplication souhaitée par le biais d'un jeu de roues de transmission (5), les arbres (1, 2) étant montés au moyen de lunettes de palier (7, 8) dans le boîtier (13, 13', 33) et les lunettes de palier (7, 8) étant montées par le biais d'au moins un élément d'amortissement (17) en vue de l'amortissement des sons et des vibrations sur le boîtier (13, 13', 33), **caractérisée en ce qu'**un dispositif de changement de vitesse ajustant la multiplication est fixé au moins à l'une des lunettes de palier (7, 8) désaccouplées du boîtier (13, 13', 33) et les deux lunettes de palier (7, 8) sont connectées dans la direction axiale des arbres (1, 2) par le biais d'au moins un élément de connexion.

2. Boîte de vitesses selon la revendication 1, **caractérisée en ce que** l'on prévoit comme élément de connexion une barre ronde (14, 14') et/ou une plaque (21).

3. Boîte de vitesses selon la revendication 2, **caractérisée en ce que** les fourchettes de changement de vitesse (19) du dispositif de changement de vitesse sont montées de manière pivotante sur la plaque (21).

4. Boîte de vitesses selon la revendication 3, **caractérisée en ce que** les fourchettes de changement de vitesse (19) sont montées par le biais d'un boulon prévu sur un axe de pivotement, qui est connecté à la plaque (21).

5. Boîte de vitesses selon la revendication 4, **caractérisée en ce que** le boulon est vissé à la plaque (21) sous forme de vis à six pans (22).

6. Boîte de vitesses selon l'une quelconque des revendications 1 à 5, **caractérisée en ce que** les éléments de connexion sont réglables en longueur.

7. Boîte de vitesses selon l'une quelconque des revendications 2 à 6, **caractérisée en ce que** chaque barre ronde (14, 14') est fixée avec ses extrémités à chaque fois dans des évidements (15, 15' ; 16, 16') du boîtier (13, 13', 33) revêtus avec l'élément d'amortissement (17).

8. Boîte de vitesses selon la revendication 1, **caractérisée en ce que** le dispositif de changement de vitesse comprend une tige de commande (9) pour l'actionnement de fourches de changement de vitesse (10), chaque extrémité de la tige de commande (9) étant montée de manière déplaçable sur la lunette de palier associée (7, 8).

9. Boîte de vitesses selon la revendication 1, **caractérisée en ce que** le dispositif de changement de vitesse comprend plusieurs rails de sélection (18) pour actionner des fourchettes de changement de vitesse (19), chaque extrémité des rails de sélection (18) étant montée de manière déplaçable sur la lunette de palier associée (7, 8).

10. Boîte de vitesses selon l'une quelconque des revendications précédentes, **caractérisée en ce que** dans le cas d'une transmission intermédiaire, au moins un arbre d'entrée de boîte de vitesses (1), au moins un arbre intermédiaire (3), un arbre principal (2) et un dispositif de changement de vitesse associé sont montés par le biais des lunettes de palier désaccouplées (7, 8).

11. Boîte de vitesses selon l'une quelconque des revendications précédentes, **caractérisée en ce qu'**un arbre de sortie de boîte de vitesses (6) avec un groupe-relais accouplé est désaccouplé du boîtier (33) par le biais d'au moins un autre élément d'amortissement (29) pour l'amortissement des sons et des vibrations.

12. Boîte de vitesses selon la revendication 11, **caractérisée en ce qu'**un point d'appui de la réaction du groupe-relais et un support de palier (28) de l'arbre d'entrée de boîte de vitesses (6) sont fixés avec l'élément d'amortissement (29) sur le boîtier (33).

13. Boîte de vitesses selon la revendication 11 ou 12, **caractérisée en ce qu'**un corps d'accouplement (27) est fixé en tant que point d'appui et le support de palier (28) est fixé par le biais de boulons de fixation (31) dans un logement de retenue associé (23, 23') du boîtier (33).

14. Boîte de vitesses selon la revendication 13, **caractérisée en ce que** chaque logement de retenue (23, 23') est revêtu avec l'élément d'amortissement (29).

15. Boîte de vitesses selon la revendication 13 ou 14, **caractérisée en ce que** chaque boulon de fixation (31, 31') est riveté dans le logement de retenue associé (23, 23').
